# EUROPÄISCHE PATENTSCHRIFT

(11) **EP 2 875 323 B1**
(45) Veröffentlichungstag und Bekanntmachung des Hinweises auf die Patenterteilung: **18.01.2017**
(21) Anmeldenummer: 13737581.2
(22) Anmeldetag: 09.07.2013
(51) Int. Cl.: G01K 1/08

(54) **HOCHTEMPERATURMESSSENSORANORDNUNG**
HIGH TEMPERATURE MEASURING SENSOR ARRANGEMENT
ENSEMBLE CAPTEUR DE HAUTE TEMPÉRATURE

(30) Priorität: 18.07.2012 DE 102012014245; 28.05.2013 DE 102013009033
(43) Veröffentlichungstag der Anmeldung: 27.05.2015
(73) Patentinhaber: Tesona GmbH & Co. KG, 99819 Hörselberg/Hainich (DE)
(72) Erfinder: LANTZSCH, Heiko, 99817 Eisenach (DE)
(74) Vertreter: Kruspig, Volkmar
(86) Internationale Anmeldenummer: PCT/EP2013/064455
(87) Internationale Veröffentlichungsnummer: WO 2014/012818

(56) Entgegenhaltungen:
- DE-A1-102011 083 437
- DE-U1-202011 001 280

## Beschreibung

Die Erfindung betrifft eine Hochtemperaturmesssensoranordnung, umfassend ein in einem Schutzrohr befindliches Sensorelement mit am Ende des Schutzrohrs freiliegendem, zur heißen Seite orientierten Messabschnitt und gegenüberliegenden, zur kalten Seite zeigenden Anschlüssen, weiterhin mit einer den Messabschnitt umgebenden, mit dem Schutzrohr in Verbindung stehenden Schutzkappe und einer zur heißen Seite gerichteten ersten Stabilisierungs- und Befestigungshülse gemäß Patentanspruch 1.

Aus der WO 2010/063682 A1 ist ein Temperaturfühler mit einem Thermoelement vorbekannt, der eine hitzebeständige Mantelleitung aufweist, an dessen dem Messmedium zugewandten Ende ein Sensorelement angeordnet ist. Durch ein Metallrohr der Mantelleitung sind elektrische Anschlussleitungen für den Anschluss des Sensorelements an eine elektronische Auswerteeinheit geführt. Der gezeigte Temperaturfühler soll bis zu Temperaturen von 1200°C einsatzfähig sein und schnelle Temperaturänderungen erfassen können. Hierfür besteht das Sensorelement aus einer Thermodrahtperle, die aus der Mantelleitung herausragt und von einer Schutzhülse aufgenommen ist, welche auf dem dem Messmedium zugewandten Ende der Mantelleitung befestigt ist. Die Schutzhülse weist ein einteiliges Vorderteil ohne Schweißstellen auf und die Mantelleitung ist ein flexibles, dünnwandiges Metallrohr mit einem geringen Außendurchmesser, an dessen dem Messmedium abgewandten Bereich Anschlussdrähte herausgeführt sind, die die gewünschte Verbindung zur Bordelektronik herstellen.

Aus der gattungsbildenden EP 2 196 787 A2 ist ein Hochtemperatursensor mit einem Sensorelement vorbekannt, das in einem Schutzrohr gelagert ist. Um auch im Umfeld hoher Temperaturen, z.B. im Abgasstrang eines Kraftfahrzeugs zuverlässige Messungen durchzuführen, ist das Schutzrohr von einem Versteifungsrohr umgeben, wobei das Versteifungsrohr aus einem Material besteht, dessen Wärmeausdehnungskoeffizient höher ist als der des Materials, aus dem das Schutzrohr besteht. Das Versteifungsrohr ist einem ersten Bereich des Schutzrohrs mit dem Schutzrohr fest verbunden und in einem zweiten Bereich des Schutzrohrs befindet sich ein Anschlagelement, das ebenfalls fest mit dem Schutzrohr verbunden ist. Das Versteifungsrohr tritt aufgrund seiner höheren Wärmedehnung ab einer vorgegebenen Temperatur in mechanischen Kontakt mit dem Anschlagelement, wodurch der Hochtemperatursensor ab dieser Temperatur mechanisch stabilisierbar ist. Der Raum zwischen dem Sensorelement und der Schutzrohrkappe ist nach EP 2 196 787 A2 mit einem gut wärmeleitenden Material gefüllt. Hierfür kann feines Siliziumpulver zur Anwendung kommen. Das stabilisierende, mechanische Inkontaktkommen des Schutzrohrs mit dem Anschlagelement erfordert eine Mindesttemperatur, so dass insbesondere unmittelbar in der Startphase bzw. im Nicht-Hochleistungsbetrieb die Gesamtanordnung zu Schwingungen neigt, die die Zuverlässigkeit der Messanordnung gefährden.

Aus der DE 10 2011 083437 A1 ist ein Hochtemperatursensor mit einem Sensorelement vorbekannt, das in einem Schutzrohr gelagert ist. Der Sensor umfasst weiterhin eine den Messabschnitt umgebende, mit dem Schutzrohr in Verbindung stehende Schutzkappe und eine zur heißen Seite gerichteten Stabilisierungs- und Befestigungshülse, welche an ihrem zur Schutzkappe weisenden Ende diese überfängt und gegen Schwingungskräfte stabilisiert, wobei die Stabilisierungs- und Befestigungshülse im Überfangbereich durchmesserreduziert ist.

Aus dem Vorgenannten ist es daher Aufgabe der Erfindung, eine weiter-entwickelte Hochtemperaturmesssensoranordnung anzugeben, welche von einem in einem Schutzrohr gelagerten Sensorelement ausgeht und wobei am Ende des Schutzrohrs, zur heißen Seite orientiert ein Messabschnitt oder eine Messperle, insbesondere eine Thermoelement-Messperle befindlich ist. Die anzugebende Hochtemperaturmesssensoranordnung soll kostengünstig herstellbar sein und über eine hohe Stabilität und geringe Ausfallrate verfügen. Darüber hinaus soll ein schnelles Ansprechen des Sensorelements gegeben sein, um einen optimalen Betrieb eines entsprechend ausgerüsteten Kraftfahrzeugs oder Kraftfahrzeugmotors, eines Turboladers oder eines stationären Motors sicherzustellen. Ein aufgabenseitiger Schwerpunkt besteht in der Stabilisierung des im Schutzrohr befindlichen Sensorelements bezüglich Schwingungen und entsprechender mechanischer und thermischer Belastungen im Abgasstrom eines Verbrennungsmotors.

Die Lösung der Aufgabe der Erfindung erfolgt mit der Merkmalskombination nach Patentanspruch 1, wobei die Unteransprüche mindestens zweckmäßige Ausgestaltungen und Weiterbildungen darstellen.

Es wird demnach von einer Hochtemperaturmesssensoranordnung, umfassend ein in einem Schutzrohr befindliches Sensorelement mit am Ende des Schutzrohrs freiliegendem, zur heißen Seite orientierten Messabschnitt und gegenüberliegenden, zur kalten Seite zeigenden Anschlüssen ausgegangen. Weiterhin ist eine den Messabschnitt umgebende, mit dem Schutzrohr in Verbindung stehende Schutzkappe und eine zur heißen Seite gerichtete erste Stabilisierungs- und Befestigungshülse vorgesehen.

Erfindungsgemäß überfängt die zur heißen Seite gerichtete Stabilisierungs-und Befestigungshülse an ihrem zur Schutzkappe weisenden Ende diese, so dass eine Stabilisierung gegen Schwingungskräfte stattfindet. Durch die gewählte Fügeverbindung können zwischen Schutzkappe und erster Stabilisierungs- und Befestigungshülse vorhandene, thermisch bedingte Ausdehnungen in Längsachsenrichtung aufgenommen werden, ohne dass eine mechanische Zerstörung oder Beschädigung eintritt.

Weiterhin ist eine zur kalten Seite gerichtete, zweite Stabilisierungs- und Befestigungshülse vorgesehen, welche am anschlussseitigen Ende das Schutzrohr überfängt und dieses abstützt, wobei die erste und die zweite Stabilisierungs- und Befestigungshülse im Füge- und Überfangbereich durchmesserreduziert ausgebildet sind.

Das vorstehend erwähnte Überfangen geschieht einerseits bezogen auf die Längsachse der Gesamtanordnung, so dass ein Stabilisieren gegenüber Schwingungskräften vorliegt. Andererseits ist das Überfangen als Fügeverbindung zwischen Schutzkappe und erster Stabilisierungs- und Befestigungshülse derart realisiert, dass thermisch bedingte Ausdehnungen in Längsachsenrichtung aufgenommen werden können. Die Fügung zwischen den vorerwähnten Elementen bleibt jedoch über den gesamten Bereich der thermischen Ausdehnung in Längsachsenrichtung der Gesamtanordnung erhalten, so dass die gewünschte mechanische Stabilität und das Schwingungsfreihalten des Messabschnitts gewährleistet sind.

Bevorzugt wird die Fügeverbindung über die gegenüberliegenden Mantelflächen der vorerwähnten Elemente realisiert.

Die Fügeverbindung ermöglicht erfindungsgemäß ein Gleiten zwischen der Schutzkappe und der Innenwandung der ersten Stabilisierungs- und Befestigungshülse bzw. zwischen der Außenseite des Schutzrohrs und der Innenwandung der zweiten Stabilisierungs- und Befestigungshülse, die sich am kalten Ende der Messsensoranordnung befindet.

Zum Ausbilden der Fügeverbindung weist die Schutzkappe bei einer bevorzugten Ausgestaltung radial umfangsseitig, bevorzugt in Längsachsenrichtung verlaufende Vor- und Rücksprünge auf.

Die zweite Stabilisierungs- und Befestigungshülse kann bei einer alternativen Ausführungsform mit dem Schutzrohr verpresst werden.

Zum Zutritt des zu messenden Mediums kann die Schutzkappe Öffnungen, z.B. schlitzförmige Öffnungen umfassen.

Die Schutzkappe weist bei einer Ausgestaltung einen im Wesentlichen zylindrischen Endabschnitt auf, welcher in einen komplementären zylindrischen Endabschnitt der ersten Stabilisierungs- und Befestigungshülse eintaucht, was eine Optimierung der mechanischen Stabilisierung der Gesamtanordnung bewirkt.

Wenn die vorerwähnten zylindrischen Endabschnitte einen reduzierten Durchmesser aufweisen, ergibt sich eine minimierte Wärmekapazität, insbesondere im Bereich des Messabschnitts, was ein schnelleres Ansprechen der Gesamtanordnung bei entsprechenden Temperaturveränderungen zur Folge hat.

Gemäß einem weiteren erfindungsgemäßen Ansatz weist die Schutzkappe eine Füllung aus einem schwingungsstabilisierenden, wärmeleitfähigen, bevorzugt pulverförmigen Material auf.

Dabei wird bei einer Ausgestaltung die Füllung bevorzugt unter Anwendung von Ultraschall oder sonstigen mechanischen Schwingungen eingerüttelt, und zwar dann, wenn der Messabschnitt bereits in die Schutzkappe eintaucht bzw. von dieser umgeben ist. Hierdurch ergibt sich eine reproduzierbare Verdichtung des Füllmaterials, ohne dass störende Kräfte auf den Messabschnitt bzw. Anschlussdrähte oder Mantelleitungen innerhalb des Schutzrohrs wirksam werden. Die Verdichtung der Füllung erfolgt bevorzugt ohne äußere Krafteinwirkung. Eine Druckverformung der Schutzkappe findet also nicht statt.

Bei einer Weiterbildung kann die Füllung auch als Schichtfüllung ausgebildet werden. Hierbei besteht die Füllung mindestens aus zwei senkrecht zur Längsachsenrichtung verlaufenden Schichten, wobei eine erste, den Messabschnitt umgebende Schicht eine sehr hohe Wärmeleitfähigkeit und eine zweite, von dem Messabschnitt weg weisende Schicht eine reduzierte Wärmeleitfähigkeit besitzt.

Hierdurch wird eine unerwünschte Wärmeabfuhr in Richtung des kalten Endes der Gesamtanordnung verringert bzw. die Wärmeleitung in diese Richtung reduziert, was bei dynamischen Messprozessen und Hochtemperaturanwendungen von besonderem Vorteil ist.

Bei einer bevorzugten Ausgestaltung weist das Füllmaterial Bornitrid-Partikel auf oder besteht aus Bornitrid-Material. Durch gezieltes Ausrichten der Bornitrid-Partikel beim Füllprozess oder unmittelbar im Anschluss an den Füllvorgang lässt sich die Richtung der Wärmeleitung zur Messperle hin einstellen. Dies sorgt dafür, dass der Wärmetransport senkrecht zur Längsachsenrichtung der Gesamtanordnung verbessert wird; hingegen in Längsachsenrichtung, d.h. zur kalten Seite hin, einer Reduzierung unterliegt.

Es besteht weiterhin die Möglichkeit, die zueinander weisenden Enden von erster und zweiter Stabilisierungs- und Befestigungshülse auf einen Druckbund bzw. einen Flansch oder eine Druckschraube, insbesondere ausgebildet als Hohlschraube, zu führen und dort durch Verschweißen zu befestigen. Der Flansch bzw. der Druckbund kann selbst als thermische Blende ausgeführt werden. Es besteht aber auch die Möglichkeit, am Flansch oder am Druckbund bzw. an der Hohlschraube zusätzliche, strahlungsschirmende Elemente anzuordnen, um nachgeordnete, insbesondere elektronische Baugruppen oder Anschlussteile vor einer unnötigen thermischen Einwirkung zu schützen.

Bei einer Weiterbildung der Erfindung ist die zweite Stabilisierungs- und Befestigungshülse von einer Schutzhülse umgeben, welche ein Isolationsteil sowie mindestens eine Dichtung und die elektronischen Anschlüsse zur externen Signalweiterverarbeitung aufnimmt. Das Isolationsteil wird mit der Schutzhülse flächenverpresst.

Gemäß einer bevorzugten Ausgestaltung besteht die Möglichkeit, in Abhängigkeit vom Durchmesser des im Schutzrohr befindlichen Sensorelements ein hülsenförmiges, gegebenenfalls durchmesserseitig abgestuftes Adapterteil vorzusehen, so dass insbesondere auf der kalten Seite maßeinheitliche Stabilisierungs- und Befestigungshülsen einsetzbar sind.

Die Erfindung soll nachstehend anhand eines Ausführungsbeispiels sowie unter Zuhilfenahme von Figuren näher erläutert werden.

Hierbei zeigen:
- Fig. 1: eine Seitenansicht der erfindungsgemäßen Hochtemperaturmesssensoranordnung;
- Fig. 2: einen Längsschnitt durch die Anordnung gemäß Fig. 1;
- Fig. 3: eine Seitenansicht der Weiterbildung der Erfindung mit Adapter und Schutzhülse am kalten Ende der Sensoranordnung und
- Fig. 4: einen Schnitt längs der Linie A-A der Anordnung gemäß Fig. 3.

Die Hochtemperaturmesssensoranordnung gemäß den Figuren geht aus von einer Mantelleitung 1, die sich in einem Schutzrohr 11 befindet.

Die Mantelleitung 1 weist einen Messabschnitt 12 auf. Dieser Messabschnitt 12 kann auch als Messperle ausgebildet sein.

Der Messabschnitt 12 befindet sich am freiliegenden Ende des Schutzrohrs 11.

Eine Schutzkappe 2 umgibt den Messabschnitt 12 und einen Teil des Schutzrohrs 11.

Eine erste, zur heißen Seite gerichtete Stabilisierungs- und Befestigungshülse 3 steht an ihrem zur Schutzkappe 2 weisenden Ende mit der Schutzkappe 2 in Verbindung. Insbesondere ist hier eine Fügeverbindung realisiert, die eine Stabilisierung gegen Schwingungskräfte bewirkt und darüber hinaus die Möglichkeit schafft, dass thermisch bedingte Ausdehnungen in Längsachsenrichtung zwischen Schutzkappe 2 und erster Stabilisierungs- und Befestigungshülse 3 aufgenommen werden können.

Weiterhin ist eine zur kalten Seite gerichtete, zweite Stabilisierungs- und Befestigungshülse 5 vorgesehen.

Diese zweite Stabilisierungs- und Befestigungshülse 5 überfängt am anschlussseitigen Ende das Schutzrohr 11 und stützt dieses ab.

Im Füge- und Überfangbereich 13; 14 sind die erste und/oder zweite Stabilisierungs- und Befestigungshülse 3; 5 durchmesserreduziert bzw. verjüngt ausgebildet.

Die zweite Stabilisierungs- und Befestigungshülse 5 kann im Bereich 14 mit dem Schutzrohr 11 verpresst werden.

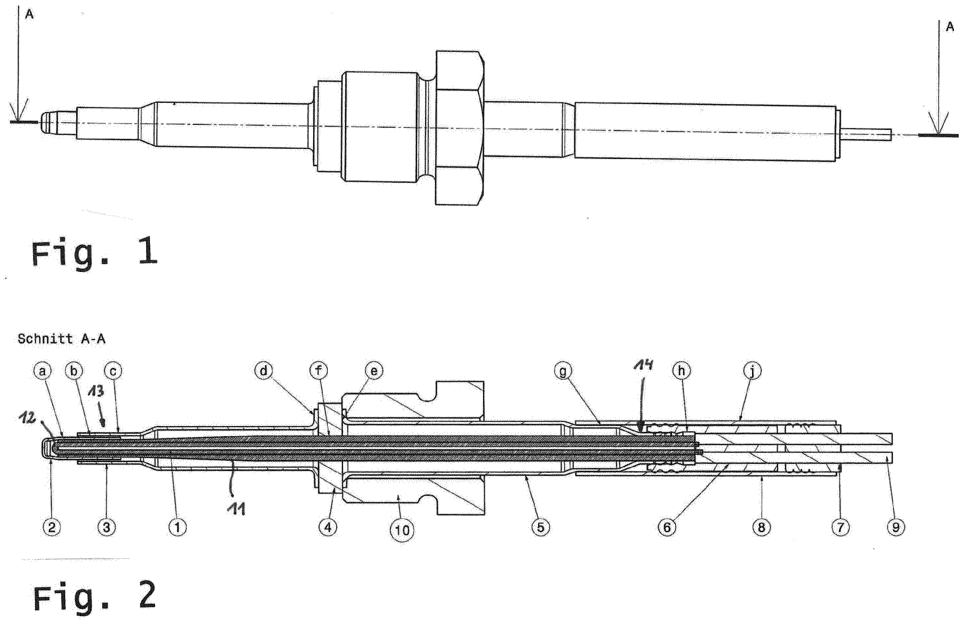

Die zweite Stabilisierungs- und Befestigungshülse 5 ist bei der gezeigten Ausführung nach Fig. 2 mit einer Schutzhülse 8 umgeben, welche ein Isolationsteil 6 sowie mindestens eine Dichtung 7 aufnimmt, so dass die Anschlüsse 9 elektrisch isoliert und abgedichtet aus der Gesamtanordnung herausgeführt werden können.

Die erste und die zweite Stabilisierungs- und Befestigungshülse 3; 5 führen mit ihren zueinander weisenden Enden auf einen Druckbund 4 und/oder eine Hohldruckschraube 10 und können mit entsprechenden Flächen dieser Elemente durch Verschweißen verbunden werden.

Mit dem Bezugszeichen a ist der Bereich einer Verbindung durch Verpressen und/oder Verschweißen symbolisiert. Das Bezugszeichen b stellt den Bereich der Fügeverbindung, das Bezugszeichen c einen Bereich einer Flächenverpressung, das Bezugszeichen d und e den Bereich des Verschweißens, das Bezugszeichen f den Bereich eines optionalen Verschweißens, das Bezugszeichen g den Bereich eines ebenfalls optionalen Verschweißens, das Bezugszeichen h einen Verpressungsbereich und das Bezugszeichen j einen Flächenverpressungsbereich dar.

Die Stützhülse auf der heißen Seite stabilisiert das Element gegen Schwingungen und starke Belastungen im Abgasrohr. Eine weitere Stabilisierung wird durch die Stützhülse auf der kalten Seite bewirkt, wobei die vorgeschlagene Konstruktion zusätzlich in der Lage ist, Temperaturunterschiede im Bereich der Verschraubung (der Hohldruckschraube) aufzufangen, so dass Messfehler, aber auch in gewissem Maße Einbaufehler kompensierbar sind.

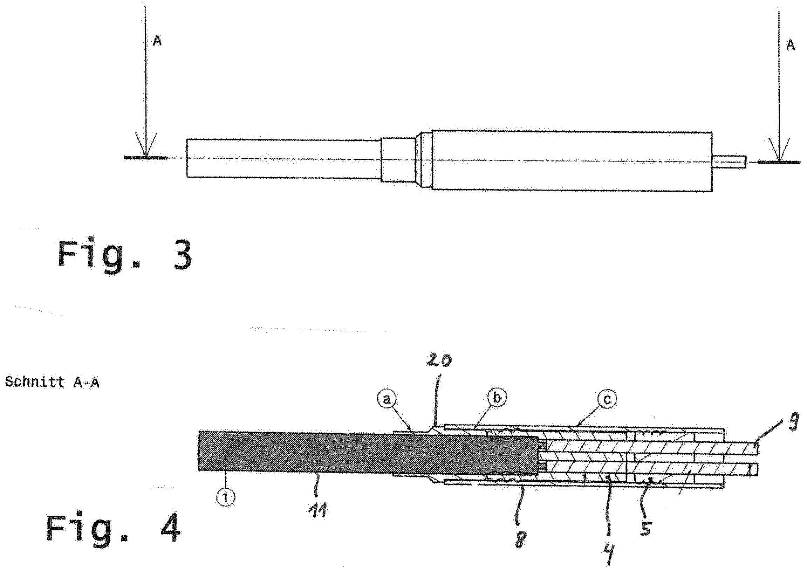

Um Thermoelemente unterschiedlicher Durchmesser einsetzen zu können, ist gemäß den Fig. 3 und 4 vorgeschlagen, einen Adapter 20 zu nutzen, der die Mantelleitung 1 bzw. das Schutzrohr 11 umgreift.

Der Adapter 20 bzw. das Adapterteil 20 wird in Abhängigkeit vom Durchmesser des im Schutzrohr 11 befindlichen Sensorelements ausgebildet, so dass insbesondere auf der kalten Seite maßeinheitliche Stabilisierungs- und Befestigungshülsen einsetzbar sind.

Die Verbindungstechnologien für die vorgenannten Teile in der Darstellung gemäß Fig. 4 sind mit dem Bezugszeichen a als verschweißt bzw. vorverpresst, mit dem Bezugszeichen b als verschweißt und mit dem Bezugszeichen c als flächenverpresst realisierbar.

## Patentansprüche

1. Hochtemperaturmesssensoranordnung, umfassend ein in einem Schutzrohr (11) befindliches Sensorelement mit am Ende des Schutzrohrs (11) freiliegendem, zur heißen Seite orientierten Messabschnitt (12) und gegenüberliegenden, zur kalten Seite zeigenden Anschlüssen (9), weiterhin mit einer den Messabschnitt (12) umgebenden, mit dem Schutzrohr (11) in Verbindung stehenden Schutzkappe (2) und einer zur heißen Seite gerichteten ersten Stabilisierungs- und Befestigungshülse (3), welche an ihrem zur Schutzkappe (2) weisenden Ende diese überfängt und gegen Schwingungskräfte stabilisiert, wobei die erste Stabilisierungs- und Befestigungshülse (3) im Füge- und Überfangbereich durchmesserreduziert ist,
**dadurch gekennzeichnet, dass**
eine zur kalten Seite gerichtete, zweite Stabilisierungs- und Befestigungshülse (5) vorgesehen ist, welche am anschlussseitigen Ende das Schutzrohr (11) überfängt und dieses abstützt, wobei auch die zweite Stabilisierungs- und Befestigungshülse (5) im Füge- und Überfangbereich durchmesserreduziert ist und die erste und zweite Stabilisierungs- und Befestigungshülse (3; 5) ansonsten zum Schutzrohr (11) mit Abstand ausgebildet sind, wobei durch Fügeverbindung (b) zwischen Schutzkappe (2) und erster Stabilisierungs- und Befestigungshülse (3) thermisch bedingte Ausdehnungen in Längsachsenrichtung aufgenommen werden und die Fügeverbindung (b) ein Gleiten zwischen Schutzkappe (2) und der Innenwandung der ersten Stabilisierungs- und Befestigungshülse (3) ermöglicht, sowie weiterhin die erste und die zweite Stabilisierungs- und Befestigungshülse (3; 5) mit ihren zueinander weisenden Enden auf einen Druckbund (4) oder Flansch führen, weicher als thermische Blende ausgebildet ist.

2. Hochtemperaturmesssensoranordnung nach Anspruch 1,
**dadurch gekennzeichnet, dass**
die Fügeverbindung (b) über die gegenüberliegenden Mantelflächen realisiert ist.

3. Hochtemperaturmesssensoranordnung nach einem der vorangegangenen Ansprüche,
**dadurch gekennzeichnet, dass**
die zweite Stabilisierungs- und Befestigungshülse (5) mit dem Schutzrohr verpresst ist.

4. Hochtemperaturmesssensoranordnung nach einem der vorangegangenen Ansprüche,
**dadurch gekennzeichnet, dass**
die zweite Stabilisierungs- und Befestigungshülse (5) von einer Schutzhülse (8) umgeben ist, welche ein Isolationsteil sowie mindestens eine Dichtung (7) und die Anschlüsse (9) aufnimmt.

5. Hochtemperaturmesssensoranordnung nach einem der vorangegangenen Ansprüche,
**dadurch gekennzeichnet, dass**
die Schutzkappe (2) einen im Wesentlichen zylindrischen Endabschnitt aufweist, welcher in einen komplementären zylindrischen Endabschnitt der ersten Stabilisierungs- und Befestigungshülse (3) eintaucht.

6. Hochtemperaturmesssensoranordnung nach Anspruch 5,
**dadurch gekennzeichnet, dass**
die jeweiligen zylindrischen Endabschnitte einen reduzierten Durchmesser mit minimierter Wärmekapazität besitzen.

7. Hochtemperaturmesssensoranordnung nach einem der vorangegangenen Ansprüche,
**dadurch gekennzeichnet, dass**
die Schutzkappe (2) eine Füllung aus einem schwingungsstabilisierenden, wärmeleitfähigen, bevorzugt pulverförmigen Material aufweist.

8. Hochtemperaturmesssensoranordnung nach Anspruch 7,
**dadurch gekennzeichnet, dass**
die Füllung unter Anwendung von Ultraschall eingerüttelt ist, wobei hierdurch eine reproduzierbare Verdichtung des Füllmaterials erfolgt.

9. Hochtemperaturmesssensoranordnung nach einem der Ansprüche 7 oder 8,
**dadurch gekennzeichnet, dass**
die Füllung mindestens zwei senkrecht zur Längsachsenrichtung verlaufende Schichten aufweist, wobei eine erste, den Messabschnitt umgebende Schicht eine hohe Wärmeleitfähigkeit und eine zweite, von dem Messabschnitt weg weisende Schicht eine reduzierte Wärmeleitfähigkeit besitzt.

10. Hochtemperaturmesssensoranordnung nach einem der Ansprüche 7 bis 9,
**dadurch gekennzeichnet, dass**
das Füllmaterial Bornitrid enthält, wobei durch gezieltes Ausrichten der Bornitrid-Partikel beim Füllprozess oder im unmittelbaren Anschluss an diesen die Richtung und/oder das Maß der Wärmeleitung zum Messabschnitt hin einstellbar ist.

11. Hochtemperaturmesssensoranordnung nach einem der vorangegangenen Ansprüche,
**dadurch gekennzeichnet, dass**
in Abhängigkeit vom Durchmesser des Schutzrohrs (11) mit Sensorelement ein hülsenförmiges Adapterteil vorgesehen ist, so dass insbesondere auf der kalten Seite maßeinheitliche Stabilisierungs- und Befestigungshülsen einsetzbar sind.

## Claims

1. A high-temperature measuring sensor arrangement, comprising a sensor element disposed in a protective tube (11) and having a measuring section (12) exposed at an end of the protective tube (11) and oriented towards a hot side, and opposite connections (9) facing the cold side, further comprising a protective cap (2) which is in connection with the protective tube (11) and encloses the measuring section (12), and a first stabilising and fastening sleeve (3) which is directed to the hot side and which, at its end facing the protective cap (2), overlays and stabilizes said cap against vibrational forces, wherein the first stabilising and fastening sleeve (3) is reduced in its diameter in the joining and overlay region, **characterized in that** a second stabilising and fastening sleeve (5) is provided which is directed towards the cold side and which overlays the protective tube (11) at the connection-side end and supports said tube, wherein the second stabilising and fastening sleeve (5) is also reduced in its diameter in the joining and overlay region, and the first and second stabilising and fastening sleeve (3; 5) is formed otherwise at a distance from the protective tube (11), wherein thermally induced expansions in the direction of the longitudinal axis are absorbed by the joining connection (b) between the protective cap (2) and the first stabilising and fastening sleeve (3), and the joining connection (b) allows a sliding between the protective cap (2) and the inner wall of the first stabilising and fastening sleeve (3), and further the first and the second stabilising and fastening sleeve (3; 5) lead to a thrust collar (4) or flange with their mutually facing ends, which is formed as a thermal baffle.

2. A high-temperature measuring sensor arrangement according to claim 1, **characterized in that** the joining connection (b) is realised via mutually opposite jacket surfaces.

3. A high-temperature measuring sensor arrangement according to one of the preceding claims, **characterized in that** the second stabilising and fastening sleeve (5) is pressed together with the protective tube.

4. A high-temperature measuring sensor arrangement according to one of the preceding claims, **characterized in that** the second stabilising and fastening sleeve (5) is surrounded by a protective sleeve (8) which accommodates an insulation part and at least one seal (7) and the connections (9).

5. A high-temperature measuring sensor arrangement according to one of the preceding claims, **characterized in that** the protective cap (2) comprises a substantially cylindrical end section, which plunges into a complementary cylindrical end section of the first stabilising and fastening sleeve (3).

6. A high-temperature measuring sensor arrangement according to claim 5, **characterized in that** the respective cylindrical end sections have a reduced diameter with minimised thermal capacity.

7. A high-temperature measuring sensor arrangement according to one of the preceding claims, **characterized in that** the protective cap (2) has a filling made from a vibration-stabilising, thermally conductive and preferably powdery material.

8. A high-temperature measuring sensor arrangement according to claim 7, **characterized in that** the filling is vibrated in by using ultrasonic sound, wherein this produces a reproducible compaction of the filling material.

9. A high-temperature measuring sensor arrangement according to one of the claims 7 or 8, **characterized in that** the filling comprises at least two layers extending perpendicularly to the longitudinal axis direction, wherein a first layer surrounding the measuring section has a high thermal conductivity and a second layer facing away from the measuring section has a reduced thermal conductivity.

10. A high-temperature measuring sensor arrangement according to one of the claims 7 to 9, **characterized in that** the filling material contains boron nitride, wherein the direction and/or the measure of the thermal conduction towards the measuring section is adjustable by purposeful orientation of the boron nitride particles during the filling process or directly thereafter.

11. A high-temperature measuring sensor arrangement according to one of the preceding claims, **characterized in that** depending on the diameter of the protective tube (11) with the sensor element a sleeve-shaped adapter part is provided, so that dimensionally uniform stabilising and fastening sleeves can be used especially on the cold side.

## Revendications

1. Agencement capteur pour mesure de haute température, incluant un élément capteur qui se trouve dans un tube protecteur (11) avec une portion de mesure (12) orientée vers le côté chaud et dégagée à l'extrémité du tube protecteur (11), et des raccordements opposés (9) tournés vers le côté froid, et incluant en outre un capuchon protecteur (2) qui entoure la portion de mesure et qui est relié au tube protecteur (11), et une première douille de stabilisation et de fixation (3) dirigée vers le côté chaud, laquelle coiffe le capuchon protecteur (2) à son extrémité tournée vers celui-ci et le stabilise à l'encontre de forces d'oscillation, dans lequel la première douille de stabilisation et de fixation (3) présente un diamètre réduit dans la zone de jointoyage et de recouvrement,
**caractérisé en ce que**
il est prévu une seconde douille de stabilisation et de fixation (5) dirigée vers le côté froid, qui coiffe le tube protecteur (11) et soutient celui-ci à l'extrémité côté raccordement, dans lequel la seconde douille de stabilisation et de fixation (5) présente également un diamètre réduit dans la zone de jointoyage et de recouvrement, et sinon la première et la seconde douille de stabilisation et de fixation (3 ; 5) sont réalisées à distance du tube protecteur (11), dans lequel par liaison jointoyée (b) entre le capuchon protecteur (2) et la première douille de stabilisation et de fixation (3) des dilatations thermiques en direction de l'axe longitudinal sont encaissées et la liaison jointoyée (b) permet un glissement entre le capuchon protecteur (2) et la paroi intérieure de la première douille de stabilisation et de fixation (3), et la première et la seconde douille de stabilisation et de fixation (3 ; 5) mènent en outre avec leurs extrémités tournées l'une vers l'autre vers une collerette de pression (4) ou une bride, qui est réalisée sous forme d'écran thermique.

2. Agencement capteur pour mesure de hautes températures selon la revendication 1,
**caractérisé en ce que**
la liaison jointoyée (b) est réalisée au moyen des surfaces enveloppe opposées.

3. Agencement capteur pour mesure de hautes températures selon l'une des revendications précédentes,
**caractérisé en ce que**
la seconde douille de stabilisation et de fixation (5) est assemblée avec le tube protecteur par pressage.

4. Agencement capteur pour mesure de hautes températures selon l'une des revendications précédentes,
**caractérisé en ce que** la seconde douille de stabilisation et de fixation (5) est entourée par une douille de protection (8) qui reçoit une pièce d'isolation ainsi qu'au moins un joint (7) et les raccordements (9).

5. Agencement capteur pour mesure de hautes températures selon l'une des revendications précédentes,
**caractérisé en ce que** le capuchon protecteur (2) comprend un tronçon terminal sensiblement cylindrique, qui plonge dans un tronçon terminal cylindrique complémentaire de la première douille de stabilisation et de fixation (3).

6. Agencement capteur pour mesure de hautes températures selon la revendication 5,
**caractérisé en ce que** les tronçons terminaux cylindriques respectifs possèdent un diamètre réduit avec une capacité de conduction thermique minimisée.

7. Agencement capteur pour mesure de hautes températures selon l'une des revendications précédentes,
**caractérisé en ce que** le capuchon protecteur (2) comprend un remplissage avec un matériau stabilisant les oscillations, capable de transmettre la chaleur et de préférence sous forme de poudre.

8. Agencement capteur pour mesure de hautes températures selon la revendication 7,
**caractérisé en ce que** le remplissage est intégré par application de secousses en employant des ultrasons, grâce à quoi il en résulte un compactage reproductible du matériau de remplissage.

9. Agencement capteur pour mesure de hautes températures selon l'une des revendications 7 ou 8,
**caractérisé en ce que** le remplissage comprend au moins deux couches s'étendant perpendiculairement à la direction de l'axe longitudinal, dans lesquelles une première couche qui entoure la portion de mesure possède une forte capacité de conduction thermique et une seconde couche détournée de la portion de mesure possède une capacité de conduction thermique réduite.

10. Agencement capteur pour mesure de hautes températures selon l'une des revendications 7 à 9,
**caractérisé en ce que** le matériau de remplissage contient du nitrure de bore, et grâce à une orientation ciblée des particules de nitrure de bore lors du processus de remplissage ou directement à la suite de celui-ci, la direction et/ou le degré de conduction thermique vers la portion de mesure est réglable.

11. Agencement capteur pour mesure de hautes températures selon l'une des revendications précédentes,
**caractérisé en ce qu'**il est prévu une pièce d'adaptation en forme de douille, en fonction du diamètre du tube protecteur (11) avec l'élément capteur, de sorte qu'il est possible d'employer des douilles de stabilisation et de fixation de dimension unitaire, en particulier sur le côté froid.
